# EUROPÄISCHE PATENTSCHRIFT

(11) **EP 1 840 279 B1**
(45) Veröffentlichungstag und Bekanntmachung des Hinweises auf die Patenterteilung: **08.03.2017**
(21) Anmeldenummer: 07090049.3
(22) Anmeldetag: 16.03.2007
(51) Int. Cl.: E03B 9/02, F16K 31/04

(54) **Vorrichtung zum Bedienen von Armaturen im Erdeinbau**
Device for operating fittings for subsurface installation
Dispositif de fonctionnement d'armatures enterrées

(30) Priorität: 30.03.2006 DE 102006015325
(43) Veröffentlichungstag der Anmeldung: 03.10.2007
(73) Patentinhaber: Berliner Wasserbetriebe Anstalt des öffentlichen Rechts, 10179 Berlin (DE); Sacharowitz, Axel, 10829 Berlin (DE); Sacharowitz, Fabian, 10777 Berlin (DE); Sacharowitz, Steffen, 10967 Berlin (DE)
(72) Erfinder: Carsten, Utke, Dipl.-Ing., 15569 Woltersdorf (DE); Sacharowitz, Ernst Ulrich, Dipl.-Ing., 10715 Berlin (DE)
(74) Vertreter: Bittner, Thomas L.

(56) Entgegenhaltungen:
- DE-A1- 10 058 441
- US-A- 4 989 830
- US-A- 5 547 164

## Beschreibung

Die Erfindung betrifft eine Anordnung mit einer Armatur im Erdeinbau und einer Vorrichtung zum Bedienen der Armatur.

Die Armaturen sind mit einer Spindel versehen, wodurch das Öffnen und Schließen der Armaturen mit oder ohne einem vorgelagerten Getriebe ermöglicht wird.
Die Spindel wird mit einem normgerechten Schieberschlüssel über ein an der Bedienstelle im Erdreich vorgesehenes Gestänge unterschiedlicher Länge, das mit der Spindel der Armatur verbunden ist, gedreht. Das Gestänge besitzt auf der bedienbaren Seite einen Vierkant und ist zur Wahrung der Drehbarkeit mit einem Schutzrohr versehen. Der Vierkant und das obere Ende des Schutzrohres sind zur besseren Auffindbarkeit und zum Schutz vor Zerstörungen von einer genormten Straßenkappe, beispielsweise nach DIN 4056 umgeben (DE 10 2004 004 933 A1; DE 197 28 510 C1).

Der Schieberschlüssel wird bekannterweise manuell bewegt. Je nach Größe, Alter und Zustand der Armatur schwankt das benötigte Drehmoment erheblich. In der Praxis treten Momente im Bereich zwischen 10 Nm und ungefähr 2000 Nm auf. Nach der bekannten Norm DIN 33411 beträgt das maximale Aktionsmoment einer männlichen Arbeitskraft 300 Nm und somit muss der Schieberschlüssel bei höheren Momenten durch mehr als eine Person betätigt werden. Durch den Einsatz von Verlängerungen des Hebelarmes wird dabei der Kraftaufwand verringert. Je nach Bauart der Armatur sind mehrere hundert Umdrehungen zum Öffnen oder Schließen der Armatur erforderlich.

Nachteil dieser Armaturenbetätigung ist ein hoher, zuvor nicht immer abzuschätzender Personalaufwand, verbunden mit nicht unerheblicher körperlicher Anstrengung, sowie ein hoher Zeitbedarf abhängig von der Gangzahl und von dem Kraftaufwand. Weiterhin liefert die Wartung der Armaturen im Handbetrieb keine reproduzierbaren Daten über den Funktionszustand einer Armatur und bietet insbesondere keine Basis einer Datenerfassung für Langzeitvergleiche und Trendaussagen, die eine Prognose eines eventuellen zukünftigen Versagens ermöglicht. Der Grund liegt darin, dass das Betätigungsmoment per Hand nur subjektiv erfasst wird, beispielsweise leicht-, schwergängig oder sehr schwergängig. Der Betreiber des Rohmetzes wird immer mit nicht mehr zu bedienenden Armaturen, verursacht durch deren unerkannt gebliebene Mängel, konfrontiert. Insbesondere im Schadensfall ist das ein erhöhtes Risiko für Personen- und Sachschäden.
Zur Arbeitserleichterung sind bewegliche Geräte entwickelt worden, mit denen ein maschinelles Drehen der Armatur ermöglicht wird.

Aus dem deutschen Gebrauchsmuster 86 00 556.1 ist ein motorisch angetriebener Schieberschlüssel bekannt.
Nachteilig ist die Notwendigkeit, das Gerät wie einen Schieberschlüssel per Hand zu halten. Daher ist der Einsatz auf eine Arbeitskraft begrenzt. Zu einer Datenerfassung für eine Zustandsanalyse der Armatur ist diese Vorrichtung auch nicht geeignet.

Aus den Veröffentlichungen DE 35 25 305 A1 und DE 34 12 032 A1 sind fahrbare Vorrichtungen bekannt, die eine maschinelle Betätigung einer im Erdreich eingebauten Armatur ermöglichen.
Nachteilig ist bei diesen Geräten, dass keine Arretierung der Räder vorgesehen ist. Ein Verdrehen bei einer Betätigung einer Armatur durch das auftretende Reaktionsmoment muss daher per Hand verhindert werden. Die Begrenzung des auszuübenden Betätigungsmomentes und die Eignung zur Datenerfassung ist auch nicht gegeben.

Aus dem deutschen Patent 40 06 478 C2 ist ein Hilfsgerät bekannt, das eine Tragestange zur Aufhängung und Drehbegrenzung eines maschinell betätigten Drehgerätes aufweist, die zur Aufnahme des auftretenden Reaktionsmomentes geeignet ist.

Nachteilig ist hierbei die Tatsache, dass dieser Arm, wie sich aus den Proportionen der Darstellung und der Kabelführung ergibt, auf die Montage an einem Fahrzeug angewiesen ist. Damit sind Armaturen im unbefestigten Bereich außerhalb des Straßenraumes nur eingeschränkt erreichbar. Die Möglichkeit des Abfangens des Reaktionsmomentes per Hand ist ebenfalls wie bei der Handbetätigung nicht gegeben. Wird der Tragearm über einen Anschlag zum Abfangen des Gegendrehmomentes eingesetzt, werden auch größere Momente als bei den bisher angeführten Vorrichtungen beherrscht.
Der Vierkant der Betätigungsstange an der Armatur und die Ankoppelung an die Welle des Drehgerätes besitzt erhebliches Spiel. Dieses und der Aufhängepunkt mit seiner pendelartigen Befestigung stellen für kleine Auslenkungen eine beidseitig gelenkige Lagerung des Drehgerätes dar. Außerdem sind sowohl der Tragearm, als auch das Gestänge zur Betätigung der Armatur nicht biegesteif. Diese Konstellation führt unter Momentbelastung bei kleinen, in der Praxis immer vorhandenen Exzentrizitäten zu einem wachsenden Ausweichen der Dreheinrichtung aus der zentrischen Lage und damit bei großen Momenten, nach Ausgleich des Spiels am Vierkant, zum Auftreten unzulässiger Querkräfte auf das Betätigungsgestänge der Armatur. Das vom Antrieb aufzubringende Moment erhöht sich in diesem Fall ebenfalls. Damit ist die Datenerfassung zur Zustandsanalyse mit dieser Vorrichtung mit einem nicht einfach abschätzbaren Fehler behaftet.

Weiterhin ist aus dem Patent EP 0 386 008 B1 eine Drehvorrichtung bekannt, die das auftretende Reaktionsmoment auf eine vorhandene Brunnen- oder Schachtwand einleitet.
Nachteilig ist die Verwendung eines Verbrennungsmotors, der in diesem Einsatzfall unzulässige Umweltbelastungen verursacht. Die Einleitung des Reaktionsmomentes auf die Brunnen- oder Schachtwand setzt diese voraus und muss in der Ausführung stabil genug sein, um den Belastungen der beschriebenen Fangvorrichtung, speziell durch deren Ecken, standzuhalten. Somit werden erhebliche Kosten verursacht. Durch Krafteinwirkung auf die Brunnen- oder Schachtwand besteht weiterhin die Gefahr einer Verlagerung oder zumindest von Vibrationen, die speziell im Straßenland zu Rissbildung der Abdichtung zum umgebenden Straßenbelag führen. Durch derartige Risse dringt Wasser ein, das zum Auffrieren und damit zu einer Zerstörung des Brunnen- oder Schachtkopfes führt.

Die dauerhafte Befestigung maschineller Drehgeräte an eine Armatur (DIN 5210 und DIN 5211) führt zu einer einwandfreien Beherrschung auch sehr großer Betätigungsmomente. Das Problem der auftretenden Reaktionsmomente wird hierbei auf Kosten der Mobilität gelöst. Die Armatur wird in einem Schachtbauwerk untergebracht. Dort werden bekannte handelsübliche elektrische Armaturenantriebe eingebaut, die eine stabile Fernbedienung der Armatur zulassen.
Nachteil dieser Konstruktion sind die exorbitant hohen Kosten für die Erstellung und Wartung eines Schachtbauwerkes. Hinzu kommen nicht unerhebliche Kosten für den Anschluss dieser Antriebe an das Stromversorgungsnetz.

Aus dem Dokument US 5,547,164 ist ein motorisiert betriebener Wasserhydrant bekannt, welcher ein bidirektionalen Motorantrieb aufweist. Es ist ein Mechanismus zum Bedienen des Hydranten für den Fall eines Ausfalls der elektrischen Spannungsversorgung vorgesehen.

Das Dokument US 4,989,830 bezieht sich auf ein drehbares Ventilsystem zum Steuern der axialen Stellung eines Drehschiebers relativ zu einem Ventilsitz zum Steuern des Durchflusses durch den Ventilsitz in einem Flüssigkeitshydranten.

Aus dem Dokument DE 100 58 441 A1 ist ein geschlossenes motorgetriebenes Ventil bekannt, welches ein Ventilgehäuse mit wenigstens einem Eingang und wenigstens einem Ausgang aufweist. Zwischen dem Eingang und dem Ausgang sind ein Ventilsitz und ein Ventilkern angeordnet, der zwischen einer offenen und einer geschlossenen Stellung des Ventilsitzes hin- und herbewegt werden kann. Dieses erfolgt motorgetrieben.

Aufgabe der Erfindung ist es, eine Anordnung mit einer Armatur im Erdeinbau und einer Vorrichtung zum Bedienen der Armatur zu schaffen, die eine Kraftaufnahme ohne Langzeitschädigung und eine zustandsorientierte Instandhaltung der Armaturen ermöglicht.

Erfindungsgemäß wird die Aufgabe durch eine Anordnung nach Anspruch 1 gelöst. Vorteilhafte Ausgestaltungen sind Gegenstand von abhängigen Unteransprüchen.

Es sind eine Armatur, eine Bedienstelle, ein Drehgerät mit einer Antriebswelle und eine Kupplung vorgesehen, die passend in einem Gestänge angeordnet und das Gestänge von einem Schutzrohr umgeben ist.
An der Bedienstelle ist eine verdrehsichere Aufnahme angeordnet, die aus mindestens einem transportablen Teil und mindestens einem ortsfesten Teil besteht. Die beiden Teile der Aufnahme sind getrennt voneinander angeordnet.
Der ortsfeste Teil der verdrehsicheren Aufnahme ist innerhalb der Straßenkappe angeordnet und drehfest im umgebenden Erdreich an einer Trageplatte verankert.
Durch die beiden Teile der Aufnahme wird eine lösbar feste Montage des Drehgerätes über der Bedienstelle möglich.
Die verdrehsichere Aufnahme hält das Drehgerät und nimmt bei einer semiautomatisch ausgeführten Bedienung der Armatur das auftretende Reaktionsmoment statisch auf und gibt es mittel- oder unmittelbar an das umgebende Erdreich weiter. Der Vorteil hierbei ist, dass Beanspruchungen an der Trennstelle zwischen Straßenkappe und Erdreich entfallen und somit Beschädigungen vermieden werden. Auch wird das Bedienpersonal vollständig entlastet.

Des Weiteren dient die feste Montage als reproduzierbarer Bezug für die Messung des Betätigungsmomentes der Armatur. Die bekannte Möglichkeit einer Betätigung der Armatur per Hand bleibt abseits des Einsatzes des transportablen Drehgerätes über das bekannte Gestänge unverändert erhalten.

Die drehsteife Montage ermöglicht einem passend konstruierten Drehgerät die unverfälschte Dokumentation des gesamten Stellvorgangs. Damit ist die Erfassung zuverlässiger Daten für Qualitätssicherung und zustandsorientierte Instandhaltung möglich.

Die Erfindung wird in dem nachfolgenden Ausführungsbeispiel in den Figuren 2 bis 9 näher erläutert. Figur 1 zeigt eine nicht-erfindungsgemäße Vorrichtung.

Im Einzelnen zeigt die
- Figur 1: die prinzipielle Gestaltung einer nicht-erfindungsgemäßen Vorrichtung
- Figur 2: die erfindungsgemäße Vorrichtung mit erweiterten Innenraum der Straßenkappe
- Figur 3: den Schnitt SS aus Figur 2
- Figur 4: den Schnitt AA aus Figur 3
- Figur 5: Verriegelungshalter des Aufnahmeteils
- Figur 6: die Detailansicht von Figur 5
- Figur 7: die Detailansicht von Figur 4 und Figur 5
- Figur 8: die Trageplatte mit sechseckiger Passöffnung
- Figur 9: den Schnitt BB aus Figur 3

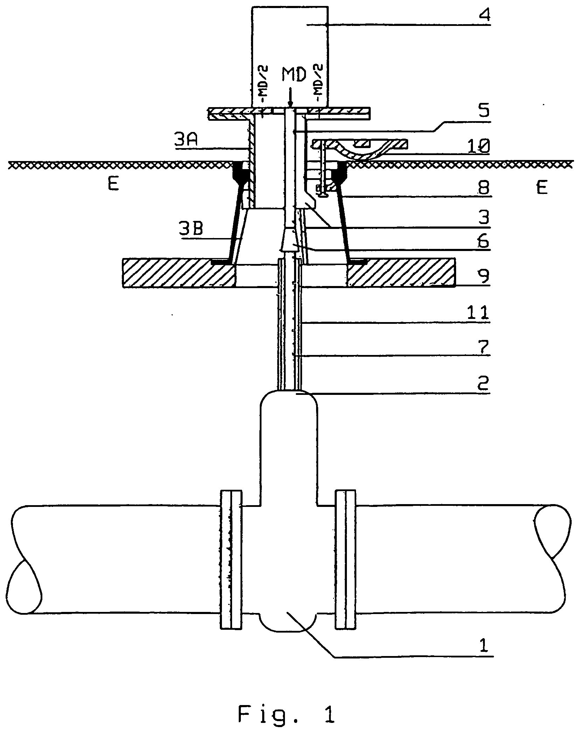

Die Figur 1 zeigt, dass der Armatur 1 über ihrer Bedienstelle 2 eine verdrehsichere Aufnahme 3 zugeordnet ist, die teilweise 3 A einem transportablen, passend konstruierten Drehgerät 4 und teilweise 3 B durch eine passende Konstruktion ortsfest jeder Bedienstelle zugeordnet ist. Die Teile 3 A und 3 B der Aufnahme 3 sind voneinander trennbar. Das Drehgerät 4 besitzt eine zweckmäßig gestaltete Abtriebswelle 5, daran befindet sich eine normgerechte Kupplung 6, die passend für das gestaltete Gestänge 7 zur Bedienung der Armatur 1 aufgebaut ist. Der Aufnahmeteil 3 B ist innerhalb der Straßenkappe 8 angeordnet und drehfest im umgebenden Erdreich E, vorzugsweise an der Trageplatte 9, verankert. Der Deckel 10 der Straßenkappe 8 ist nach DIN 3580 gestaltet. Das Gestänge 7 ist durch ein Schutzrohr 11 vom Erdreich getrennt.

Die gesamte Aufnahme 3 = 3 A und 3 B ermöglicht eine lösbar feste Montage des Drehgerätes über der Bedienstelle 2 und hält das Drehgerät 4 sowie nimmt bei einer damit semiautomatisch ausgeführten Bedienung der Armatur 1 das auftretende Reaktionsmoment MD statisch auf und gibt es mittel- oder unmittelbar an das umgebende Erdreich E weiter. Die feste Montage dient als reproduzierbarer Bezug für die Messung des Betätigungsmomentes MD der Armatur. Die bekannte Möglichkeit einer Betätigung der Armatur per Hand bleibt abseits des Einsatzes des transportablen Drehgerätes über das bekannte Gestänge 7 unverändert erhalten.

Die drehsteife Montage ermöglicht einem passend konstruierten Drehgerät 4 die unverfälschte Dokumentation des gesamten Stellvorgangs. Damit ist die Erfassung zuverlässiger Daten für Qualitätssicherung und zustandsorientierte Instandhaltung gegeben.

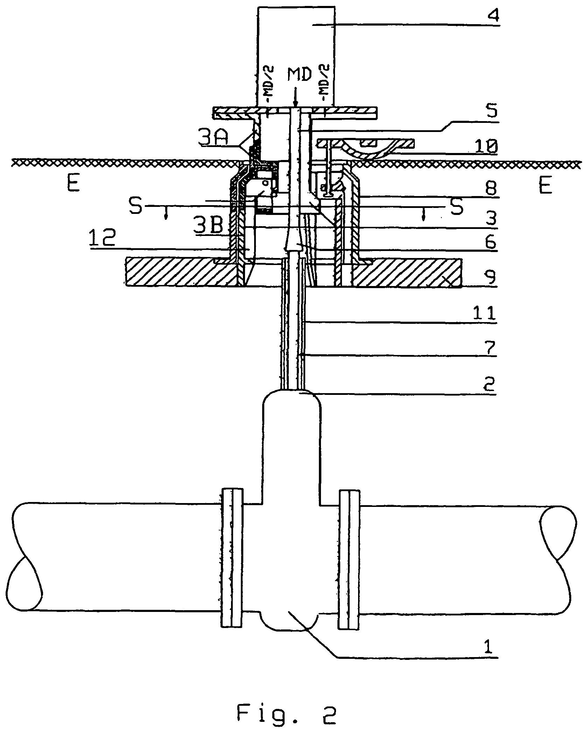

Die Gesamtansicht der Figur 2 unterscheidet sich in praxisgerechteren Einzelheiten von der prinzipiellen Ansicht der Figur 1, speziell durch die erweiterte Ansicht des Innenraumes der Straßenkappe. Damit ist Platz für die Aufnahme 3 B und für den Gebrauch eines normgerechten Schieberschlüssels gegeben.

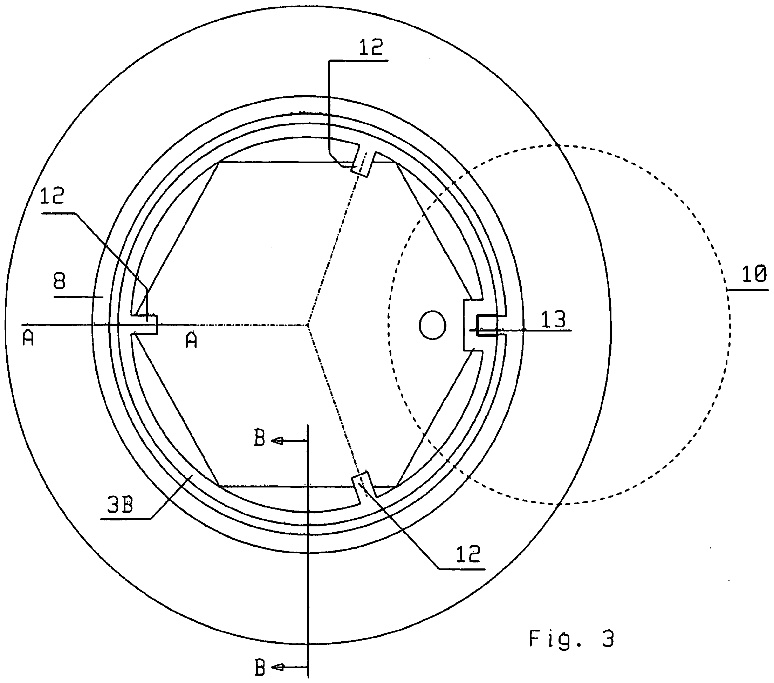

Figur 3 zeigt den in Figur 2 markierten Schnitt SS. Die Straßenkappe 8 umschließt den ortsfesten Teil der Aufnahme 3 A, der formschlüssig mit dem Aufnahmeteil 3 B gefügt werden soll. Daher sind drei Rippen 12 vorgesehen, die zur sicheren Aufnahme des Reaktionsmomentes MD aus Figur 1 geeignet sind. Eine Verdrehsicherung 13 sorgt dauerhaft für eine korrekte Orientierung zwischen Straßenkappe 10 und Aufnahmeteil 3 A. Diese Orientierung bleibt erhalten, da der Deckel 10 unverlierbar mit der Straßenkappe 8 verbunden ist und durch deren Öffnung eine Unsymmetrie hervorgerufen wird.

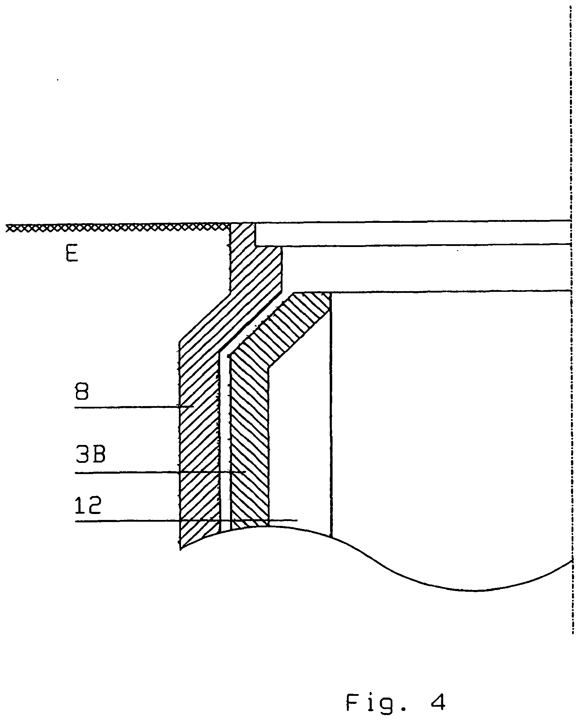

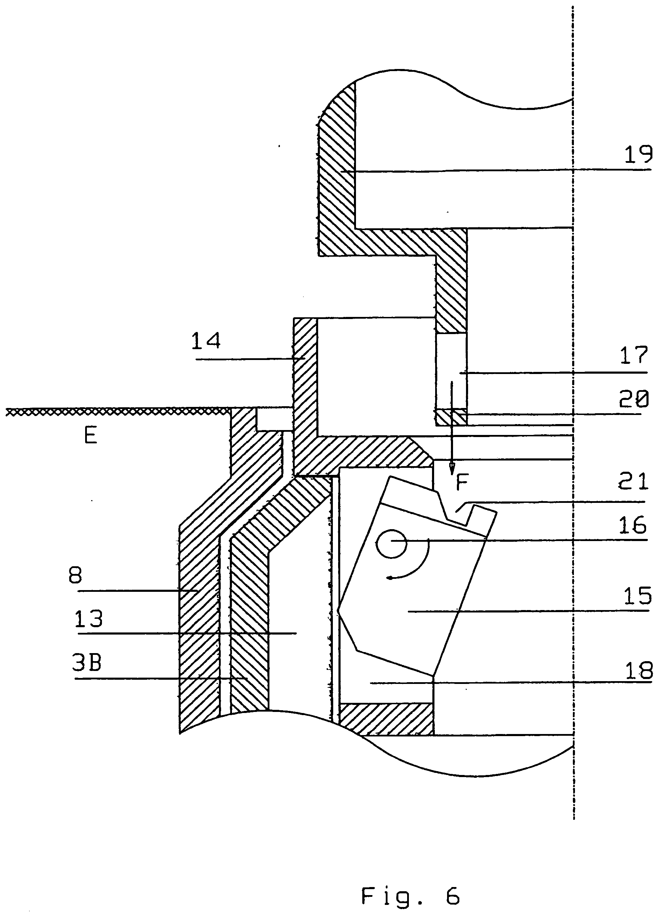

Figur 4 zeigt den Aufriss AA aus Figur 3 am oberen Ende der Straßenkappe 8 und des innenliegenden Aufnahmeteils 3 A mit einer Rippe 12.

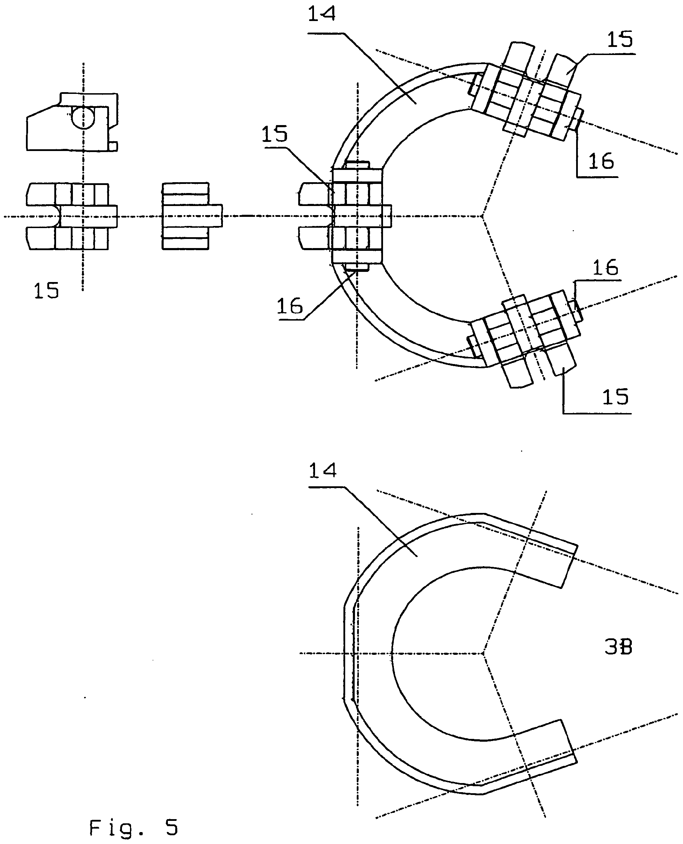

Figur 5 zeigt die unmittelbar in den Aufnahmeteil 3 A passenden Elemente des Aufnahmeteils 3 B.
Der Trägerkörper 14 hält drei Riegel 15, die jeweils mit einem Bolzen 16 leicht drehbar im Trägerkörper 14 gelagert sind. Diese Riegel 15 stellen im eingerasteten Zustand formschlüssig eine drehsteife Verbindung zwischen dem ortsfesten Teil 3 A und den transportablen Teil der Aufnahme 3 B her, in dem diese einerseits je eine Rippe 12 (Figur 3) umfassen, andererseits in je eine passende Ausnehmung 17 (Figur 6) des Aufnahmeteils 3 B ragen.
Der Riegel 15 ist mit allen drei Ansichten separat gezeichnet.

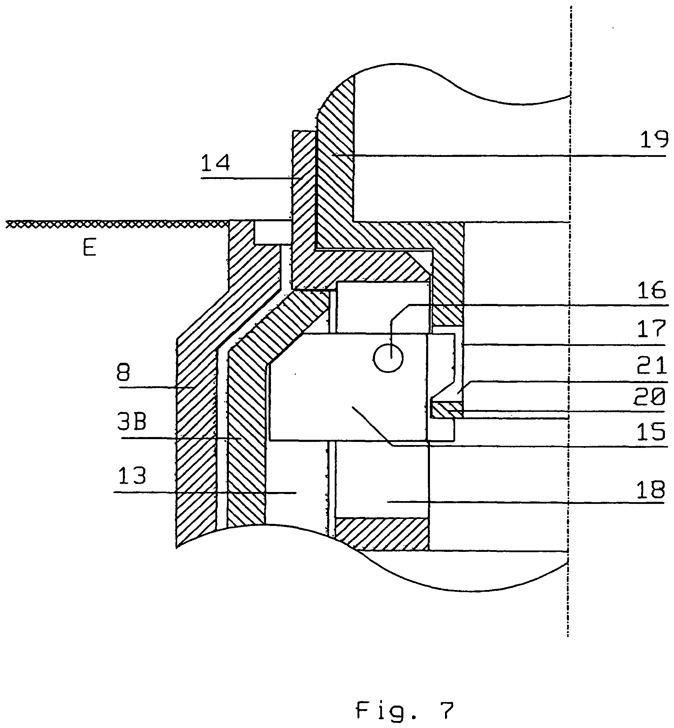

Figur 6 und Figur 7 erläutern den Fügevorgang der Aufnahmeteile 3 A und 3 B. Der Trägerkörper 14 wird wie in Figur 6 sichtbar in den Aufnahmeteil 3 A eingesetzt. Die mit dem Bolzen 16 drehbar in der Ausnehmung 18 gelagerten Riegel 15 behindern diesen Vorgang nicht. Eine zweckmäßige Führung sorgt für die winkelrichtige Orientierung zwischen Riegeln 15 und Rippen 12. Nach dem Einsetzen des Trägers 14 wird die fest am Drehgerät 4 montierte Andruckhülse 19 heruntergedrückt. Die Andruckhülse 19 passt konzentrisch und nur mit richtiger Orientierung in den Träger 14. Die Fügerichtung ist in Figur 6 mit dem Pfeil F gekennzeichnet. Beim Einsetzen des Drehantriebs drückt der Steg 20 der Andruckhülse 19 in die Ausnehmung 21 des Riegels 15 und dreht diesen um den Bolzen 16 in die gezeichnete Richtung. Die Abmessungen des Riegels 15, der Rippe 12 und der Ausnehmungen 17 und 18 sind so aufeinander abgestimmt, dass nach dem Einsetzen, wie in Figur 7 gezeichnet, alle Teile steif miteinander verbunden sind.
Das beim Stellvorgang auftretende Moment MD verursacht keine Kraftkomponente in axialer Richtung, so dass eine relativ leichte, hier nicht gezeichnete Sicherung ein Lösen der Verbindung verhindert.
Eine Demontage des Drehantriebs 4 erfolgt problemlos in der entgegengesetzten Reihenfolge.

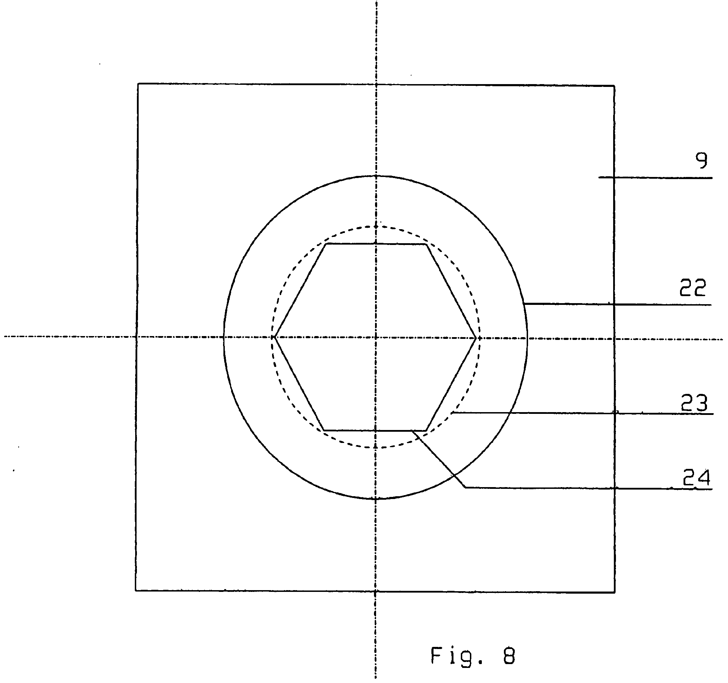

In der Figur 8 wird die drehfeste Montage des ortsfesten Teils der Aufnahme 3 B beispielhaft an der Trageplatte 9 gezeigt, die normgerecht mit einer Aussparung 22 für den Kappenfuß versehen ist.

Innerhalb der inneren Grenze der Aufstandsfläche 23 wird der Aufnahmeteil durch eine achssymmetrische Gestaltung der Passöffnung 24 formschlüssig und verdrehsicher gehalten. Die hier vorliegende Kontur der Passung ist als ein gleichseitiges Sechseck ausgebildet.

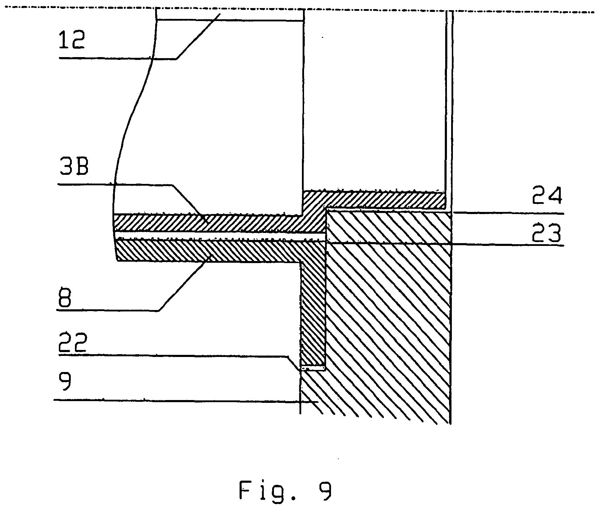

In Figur 9 ist der Schnitt BB aus Figur 3 gezeigt, in der der Passungsbereich von Aufnahmeteil 3 B und Passöffnung 24 im Inneren der Straßenkappe 8 dargestellt wird, die in bekannter Weise mit den Straßenkappenfuß 22 in die Aussparung eingesetzt ist.

Aufstellung der verwendeten Bezugszeichen zur Patentanmeldung "Vorrichtung zum Bedienen von Armaturen im Erdeinbau"
- 1: Armatur
- 2: Bedienstelle
- 3: verdrehsichere Aufnahme
- 3 A: transportabler Teil der verdrehsicheren Aufnahme
- 3 B: ortsfester Teil der verdrehsicheren Aufnahme
- 4: Drehgerät
- 5: Abtriebswelle
- 6: Kupplung
- 7: Gestänge
- 8: Straßenkappe
- 9: Trageplatte
- 10: Deckel
- 11: Schutzrohr
- 12: Rippen
- 13: Verdrehsicherung
- 14: Trägerkörper
- 15: Riegel
- 16: Bolzen
- 17: Ausnehmung
- 18: Ausnehmung
- 19: Andruckhülse
- 20: Steg
- 21: Ausnehmung
- 22: Aussparung
- 23: Grenze der Aufstandsfläche
- 24: Passöffnung
- MD: Reaktionsmoment
- E: Erdreich
- BB: Schnitt
- SS: Schnitt
- AA: Aufriss
- F: Pfeil

## Patentansprüche

1. Anordnung, mit:
- einer Armatur (1) im Erdeinbau, an der eine Bedienstelle (2) gebildet ist, und
- einer Vorrichtung zum Bedienen der Armatur (1), die mit einem mobilen Drehgerät (4) gebildet ist, wobei das Drehgerät (4) eine Antriebswelle (5) und eine hieran angeordnete Kupplung (6) aufweist,
wobei
- die Kupplung (6) des mobilen Drehgeräts (4) drehfest mit einem Gestänge (7) verbindbar ist, das von einem Schutzrohr (11) umgeben ist und über die Bedienstelle (2) an die Armatur (1) koppelt,
- eine verdrehsichere Aufnahme (3) gebildet ist, die eine lösbar feste Montage des Drehgerätes (4) über der Bedienstelle (2) ausbildet,
- die Aufnahme (3) aus einem transportablen, an dem mobilen Drehgerät (4) angeordneten Aufnahmeteil (3A) und einem ortsfesten, der Bedienstelle (2) zugeordneten Aufnahmeteil (3B) besteht, das von dem transportablen Aufnahmeteil (3A) trennbar ist,
und
- das ortsfeste Aufnahmeteil (3B) innerhalb einer Straßenkappe (8) angeordnet und drehfest im umgebenden Erdreich verankert ist, so dass bei einem semiautomatischen Bedienen der Armatur (1) ein auftretendes Reaktionsmoment von der Aufnahme (3) aufgenommen und mittel- oder unmittelbar an das umgebende Erdreich abgegeben wird,
**dadurch gekennzeichnet, dass** das auftretende Reaktionsmoment ohne Beanspruchung der Straßenkappe (8) an das umgebende Erdreich abgegeben wird.

2. Anordnung nach Anspruch 1, **dadurch gekennzeichnet, dass** das transportable Aufnahmeteil (3A) und das ortsfeste Aufnahmeteil (3B) formschlüssig gefügt sind.

3. Anordnung nach Anspruch 2, **dadurch gekennzeichnet, dass**
- das ortsfeste Aufnahmeteil (3B) mit einem Trägerkörper (14) gebildet ist, der drei Riegel (15) hält, welche jeweils mittels eines Bolzens (16) drehbar im Trägerkörper (14) gelagert sind, und
- die drei Riegel (15) in einem eingerasteten Zustand formschlüssig eine drehsteife Verbindung zwischen dem transportablen Aufnahmeteil (3A) und dem ortsfesten Aufnahmeteil (3B) herstellen, indem am transportablen Aufnahmeteil (3A) gebildet Rippen (12) in passende Ausnehmungen (17) am ortsfesten Aufnahmeteil (3B) ragen.

4. Anordnung nach einem der vorangehenden Ansprüche, **dadurch gekennzeichnet, dass** das ortsfeste Aufnahmeteil (3B) an einer Trageplatte (9) drehfest im umgebenden Erdreich verankert ist.

## Claims

1. Apparatus, comprising:
- an in-ground fitting (1) on which an operating point (2) is formed, and
- a device for operating the fitting (1) which is constructed with a movable rotary device (4), wherein the rotary device (4) has a driveshaft (5) and a coupling (6) connected thereto,
wherein
- the coupling (6) of the movable rotary device (4) is connectable in torque proof manner to a rod arrangement (7) that is surrounded by a protective tube (11) and couples with the fitting (1) via the operating point (2),
- a torsion proof mounting (3) is formed and creates a detachably fixed assembly of the rotary device (4) above the operating point (2),
- the mounting (3) consists of a transportable mounting part (3A) arranged on the movable rotary device (4) and a fixed position mounting part (3B) attached to the operating point (2), which can be separated from the transportable mounting part (3A),
and
- the fixed position mounting part (3B) is arranged and anchored non-rotatably inside a surface box (8) in the surrounding ground, so that when the fitting (1) is operated semiautomatically a reaction torque that occurs is absorbed by the mounting (3) and output directly or indirectly to the surrounding ground,
**characterised in that** the reaction torque that occurs is provided to the surrounding ground without exerting any load on the surface box (8).

2. Apparatus according to claim 1, **characterised in that** the transportable mounting part (3A) and the fixed position mounting part (3B) are joined in positive locking manner.

3. Apparatus according to claim 2, **characterised in that**
- the fixed position mounting part (3B) is constructed with a bearing body (14) which holds three bars (15), each of which bars is supported via a pin (16) so as to be rotatable in the bearing body (14), and
- fins (12) constructed on the transportable mounting part (3A) protrude into matching recesses (17) on the fixed position mounting part (3B) so that in an engaged state the three bars (15) form a positive locking and torsionally rigid connection between the transportable mounting part (3A) and the fixed position mounting part (3B).

4. Apparatus according to any of the preceding claims, **characterised in that** the fixed position mounting part (3B) is anchored on a support plate (9) non-rotatably in the surrounding ground.

## Revendications

1. Agencement, avec :
- une armature (1) dans une installation enterrée, sur laquelle est formée un point de commande (2), et
- un dispositif pour commander l'armature (1), qui est formé avec un appareil rotatif mobile (4), l'appareil rotatif (4) comportant un arbre d'entraînement (5) et un accouplement (6) disposé dessus,
- l'accouplement (6) de l'appareil rotatif mobile (4) pouvant être raccordé de manière solidaire en rotation à une tringlerie (7), qui est entourée d'un tube de protection (11) et est couplée par le point de commande (2) à l'armature (1),
- un logement (3) antigiratoire étant formé, qui constitue un montage fixe de manière amovible de l'appareil rotatif (4) sur le point de commande (2),
- le logement (3) étant composé d'une partie de logement (3A) transportable disposée sur l'appareil rotatif mobile (4) et d'une partie de logement (3B) fixe, attribuée au point de commande (2), qui est séparable de la partie de logement (3A) transportable
et
- la partie de logement fixe (3B) étant disposée à l'intérieur d'un regard de vanne (8) et étant ancrée solidaire en rotation dans le terrain environnant de telle manière que lors du fonctionnement semi-automatique de la armature (1) un couple de réaction se produisant du logement (3) est absorbé et est transmis indirectement ou directement au terrain environnant,
**caractérisé en ce que** le couple de réaction se produisant est transmis au terrain environnant sans sollicitation du regard de vanne (8).

2. Agencement selon la revendication 1, **caractérisé en ce que** la partie de logement transportable (3A) et la partie de logement fixe (3B) sont jointes par conformité de forme.

3. Agencement selon la revendication 2, **caractérisé en ce que**
- la partie de logement fixe (3B) est formée avec un corps de support (14) qui tient trois verrous (15), lesquels sont respectivement logés au moyen d'un boulon (16) pouvant tourner dans le corps de support (14),
- les trois verrous (15) établissent par conformité de forme une liaison rigide à la torsion dans un état enclenché entre la partie de logement transportable (3A) et la partie de logement fixe (3B), les nervures (12) formées sur la partie de logement transportable (3A) venant dans les cavités appropriées (17) sur la partie de logement fixe (3B).

4. Agencement selon l'une quelconque des revendications précédentes, **caractérisé en ce que** la partie de logement fixe (3B) est ancrée solidaire en rotation sur une plaque de support (9) dans le terrain environnant.
